# FASCICULE DE BREVET EUROPEEN

(11) **EP 2 879 820 B1**
(45) Date de publication et mention de la délivrance du brevet: **14.09.2016**
(21) Numéro de dépôt: 13744538.3
(22) Date de dépôt: 31.07.2013
(51) Int. Cl.: B22F 3/105, B29C 67/00

(54) **MACHINE POUR LA FABRICATION ADDITIVE À BASE DE POUDRE**
MASCHINE ZUR HERSTELLUNG EINES PULVERFÖRMIGEN ZUSATZSTOFFS
MACHINE FOR POWDER-BASED ADDITIVE MANUFACTURING

(30) Priorité: 31.07.2012 FR 1257420
(43) Date de publication de la demande: 10.06.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: TORRES-CATELLANO, Miguel, F-63040 Clermont-Ferrand Cedex 9 (FR)
(74) Mandataire: Noel, Luminita
(86) Numéro de dépôt international: PCT/EP2013/066131
(87) Numéro de publication internationale: WO 2014/020086

(56) Documents cités:
- EP-A1- 0 868 955
- WO-A1-01/81031
- WO-A1-93/25336
- DE-A1- 19 939 616
- DE-A1-102004 057 865
- DE-A1-102010 006 939
- DE-A1-102010 011 059

## Description

L'invention concerne les machines pour la fabrication additive à base de poudre par frittage ou fusion des grains de ladite poudre à l'aide d'un faisceau énergétique comme un rayonnement électromagnétique (par exemple un faisceau laser) ou un faisceau de particules (par exemple un faisceau d'électrons). Ces machines utilisent des procédés de fabrication additive à base de poudre conduisant à une consolidation successive, couche par couche, à l'aide d'un faisceau énergétique ou de particules, des zones sélectionnées d'une strate de matériau pulvérulent, les zones consolidées correspondant à des sections successives de l'objet tridimensionnel.

Plus précisément, l'invention se rapporte aux moyens assurant le déplacement en translation verticale d'un plateau horizontal de la machine, tel le plateau supportant l'objet tridimensionnel à fabriquer.

Le document EP-868955-A1 décrit une machine pour la fabrication additive à base de poudre des moules pour pneumatiques. La machine comprend des moyens de mise en couche, des moyens de support de l'objet et des moyens de frittage de la poudre à l'aide d'une source laser. Les moyens de mise en couche et ceux de support de l'objet à fabriquer utilisent des ensembles de type piston coulissant dans un cylindre et des moyens de déplacement des pistons à l'intérieur des cylindres. Le guidage de la tige des pistons se fait sur une courte distance en la partie inférieure du cylindre, ce qui fait que ces dispositifs présentent des risques d'arc-boutement ou de grippage des pistons. Par ailleurs, ce document est silencieux quant au positionnement géométrique du plateau par rapport au référentiel de la machine.

Le document US-6554600-B1 divulgue un autre exemple de machine permettant de fabriquer un objet tridimensionnel par frittage de poudre à l'aide d'un faisceau laser. Cette machine comprend un espace de construction au sein duquel est agencé un conteneur interchangeable comportant un cadre de construction et une plateforme de support de l'objet à fabriquer. L'objet à fabriquer est construit à l'intérieur du conteneur qui est retiré de l'espace de construction à la fin de l'opération. Dans une variante, le conteneur renferme, en plus de la plateforme et de l'objet à fabriquer, un mécanisme de support et de déplacement en translation de la plateforme. Les inconvénients de cette configuration sont l'encombrement important et le poids du conteneur à transporter. Dans une autre variante, la paroi arrière du conteneur comprend des fentes verticales à travers lesquelles s'engagent et coulissent des moyens de fixation de la plateforme qui porte l'objet à un bras latéral d'actionnement en translation verticale de celle-ci. L'inconvénient de cette configuration est qu'elle fait appel à un actionnement en porte à faux du plateau impliquant des fortes sollicitations du bras d'actionnement, notamment lors de la compression de la poudre ou lors de la confection des pièces de grandes dimensions.

Une solution a été proposée dans le document EP-1099534-A2 où la plateforme qui porte l'objet à fabriquer est montée moyennant un cadre de support à l'intérieur d'un conteneur interchangeable. La plateforme est déplacée verticalement en étant entraînée par un piston dont l'extrémité supérieure vient en prise avec la plateforme et dont l'extrémité inférieure est solidaire d'un chariot qui glisse sur les rails latéraux à l'intérieur d'un boîtier de guidage. Assurant, certes, un meilleur guidage du piston que les dispositifs des documents précédents, ce document présente les inconvénients d'une course limitée du piston pour un encombrement important de l'ensemble (les moyens de mise en mouvement du piston étant externes au boîtier de guidage). Par ailleurs, une telle construction nécessite une grande précision d'exécution pour ne pas contraindre le guidage ou éviter les trop fortes sollicitations sur le système vis-écrou. De surcroît, une lubrification du système de guidage linéaire et du système vis-écrou sont nécessaires, ce qui présente un risque dans un environnement de travail utilisant un matériau pulvérulent.

L'invention a donc pour objectif de pallier l'un au moins des inconvénients décrits ci-dessus et de proposer une machine de fabrication additive à base de poudre à l'aide d'un faisceau énergétique d'un objet tridimensionnel comportant un dispositif de déplacement en translation du plateau de fabrication permettant d'assurer un guidage précis du plateau lors de son déplacement à l'intérieur du cadre de construction, tout en lui permettant de supporter une charge importante et de garder une position stable en fonctionnement, pour un faible encombrement de l'ensemble.

Ces objectifs sont atteints avec une machine pour la fabrication additive d'un objet tridimensionnel par frittage ou fusion de poudre à l'aide d'un faisceau énergétique agissant sur une couche de poudre dans une zone de travail, comportant un dispositif de déplacement en translation verticale d'un plateau de support à l'intérieur d'une chemise de fabrication montée sur le châssis de ladite machine, ledit dispositif comportant une colonne montée sur ledit châssis à l'intérieur de laquelle est agencé un vérin comportant un corps solidaire de ladite colonne et une tige mobile reliée audit plateau des moyens de guidage de la tige mobile dudit vérin, du fait que lesdits moyens de guidage comportent des éléments de guidage prismatiques sur ladite colonne et sur un tube coaxial à celle-ci qui se déplace avec la tige mobile dudit vérin.

La machine de l'invention comporte un dispositif qui permet de déplacer le plateau de support de l'objet à fabriquer en translation verticale à l'intérieur d'une chemise de fabrication et de le guider lors de son déplacement. Le dispositif comprend un vérin qui est un dispositif de levage comportant un corps fixe et une tige mobile qui est reliée au plateau de support de l'objet à fabriquer. Par chemise de fabrication on comprend un cadre qui entoure le plateau de fabrication et qui peut être monté fixe ou amovible par rapport au châssis d'une machine de fabrication dudit objet. La machine permet la fabrication d'un objet tridimensionnel par frittage ou fusion de poudre à l'aide d'un faisceau énergétique.

Par vérin on comprend un dispositif de levage par exemple du type pantographe ou de préférence du type comportant un corps tubulaire à l'intérieur duquel se déplace en translation une tige rigide permettant de transmettre un déplacement et une vitesse à son extrémité.

Plus particulièrement selon l'invention, les moyens de guidage sont des éléments de guidage prismatiques rapportés ou disposés sur deux éléments tubulaires amenés à coulisser l'un par rapport à l'autre, un premier élément tubulaire qui est une colonne de support de la partie fixe du vérin et un deuxième qui se déplace avec la tige mobile du vérin, en étant relié à celle-ci. Par éléments de guidage prismatiques on comprend des éléments de guidage comportant des faces planes qui sont parallèles à la direction du déplacement. Ainsi, les faces planes peuvent être celles des éléments tubulaires ou parallèles à celle-ci, lorsqu'ils ont une section transversale polygonale, ou être usinées sur les surfaces en vis-à-vis des éléments tubulaires cylindriques. Une construction de guidage à éléments tubulaires permet de disposer le vérin au centre d'un des éléments, notamment à l'intérieur de la colonne, et de permettre un appui du plateau sur un grand diamètre tout en appliquant la force de poussée au centre du plateau, donc sous le centre de gravité de la charge à supporter. Une telle construction à tubes coaxiaux permet un gain de rigidité en flexion latérale, elle permet également de réduire les déformations du plateau, pour une construction compacte de l'ensemble. Un tel guidage réalisé à la périphérie de l'élément de support de la tige mobile permet au plateau de prendre appui sur un support ayant une grande surface (au moins égale à celle de la section de l'élément de support), ce qui permet l'application des sollicitations importantes sur le plateau, pour une flèche moindre de celui-ci.

Dans un mode préféré de réalisation de l'invention, la colonne et le tube sont cylindriques. Ceci permet de réaliser un meilleur centrage des composants (tube, colonne) l'un par rapport à l'autre et une meilleure correction de leur positionnement par rapport aux composants de la machine.

Avantageusement, ledit tube est agencé à l'intérieur de ladite colonne. On aurait pu envisager, certes, un tube coulissant à l'extérieur de la colonne. On préfère toutefois, d'agencer le tube à l'intérieur de la colonne pour plus de facilité de montage des éléments de guidage.

De préférence, ladite colonne comporte plusieurs patins de guidage uniformément répartis sur sa périphérie interne qui sont destinés à venir en contact avec des méplats aménagés à l'extérieur du tube. Les patins de guidage définissent les faces planes de guidage en contact avec des méplats pratiqués sur la longueur de guidage du tube assurant ainsi une répartition uniforme des efforts et un bon guidage. Une telle construction à éléments tubulaires cylindriques à faces planes permet d'obtenir un rapport masse/rigidité optimisé pour garder une position stable même lorsque des forces transversales sont appliquées sur le plateau

Avantageusement, ladite machine comporte deux patins de guidage fixes et un patin de guidage mobile.

Une telle construction permet un bon fonctionnement de l'ensemble de guidage, en évitant une construction soit hyperstatique soit avec jeu important (à trois patins fixes), tout en permettant un glissement parallèle des patins sur les méplats du tube et d'absorber les défauts géométriques des pièces constituant l'ensemble de guidage, voire de compenser l'usure des surfaces de guidage.

De préférence, la machine de l'invention comporte un soufflet étanche agencé entre ladite colonne et ledit tube. Ce soufflet empêche les particules de poudre de pénétrer à l'intérieur du dispositif et préserve le bon fonctionnement de ce dernier.

Selon un aspect avantageux de l'invention, ladite colonne est montée moyennant un dispositif de précharge par rapport audit châssis. Un tel dispositif de précharge permet de fixer de manière ferme la colonne par rapport au châssis, tout en permettant d'absorber les vibrations ou les micromouvements dus au fonctionnement de la machine.

De préférence, ladite machine comporte des moyens de réglage de la position de ladite colonne par rapport audit châssis. Ceci permet au plan du plateau d'être correctement orienté par rapport au plan de la zone de travail.

De préférence, ladite colonne est montée moyennant une articulation sphérique par rapport audit châssis. Lesdits moyens de réglage sont aptes à ajuster la position de la colonne autour de ladite articulation sphérique. Ceci permet un réglage de la position de la colonne par rotation autour des trois axes orthogonaux du référentiel de la machine.

Avantageusement, le centre de la sphère est situé sur la surface de construction du plateau de support (on comprend la face supérieure du plateau lorsqu'il est en position haute au niveau de la zone de travail), ce qui permet de corriger directement les défauts d'orientation, en effectuant des rotations selon au moins l'un des axes orthogonaux sans effectuer des calculs de compensation des déplacements suivant cet axe.

Dans un mode préféré de réalisation de l'invention, ledit plateau se déplace à l'intérieur d'une chemise appartenant au châssis de la machine et à l'intérieur d'un conteneur interchangeable agencé sous ladite chemise.

Cette construction permet de fabriquer avec précision l'objet à l'intérieur d'une chemise ayant le même référentiel que celui de la machine, et de récupérer l'objet fabriqué et la poudre à l'intérieur du conteneur interchangeable placé sous la chemise.

L'invention sera mieux comprise grâce à la suite de la description, qui s'appuie sur les figures suivantes :
- la figure 1 est une vue schématique en coupe d'une machine selon l'invention ;
- la figure 2 est une vue schématique en coupe axiale du dispositif de déplacement en translation verticale du plateau de la machine de l'invention, ce dernier étant illustré en position basse;
- la figure 3 est une vue schématique en coupe transversale selon le plan A-A de la fig. 2 ;
- la figure 4 est une vue à échelle agrandie du détail E de la fig. 3 ;
- la figure 5 représente une vue de dessus du dispositif de la fig. 2 ;
- la figure 6 est une vue partielle en coupe effectuée avec le plan B-B de la fig. 5 ;
- la figure 7 est une vue en coupe axiale du dispositif déplacement en translation verticale monté sur le châssis de la machine de l'invention ;
- la figure 8 est une vue en perspective simplifiée du dispositif de précharge permettant le montage du dispositif de déplacement en translation verticale du plateau sur le châssis de la machine de l'invention.

Sur les différentes figures, les éléments identiques ou similaires portent les mêmes références. La description de leur structure et de leur fonction n'est donc pas systématiquement reprise.

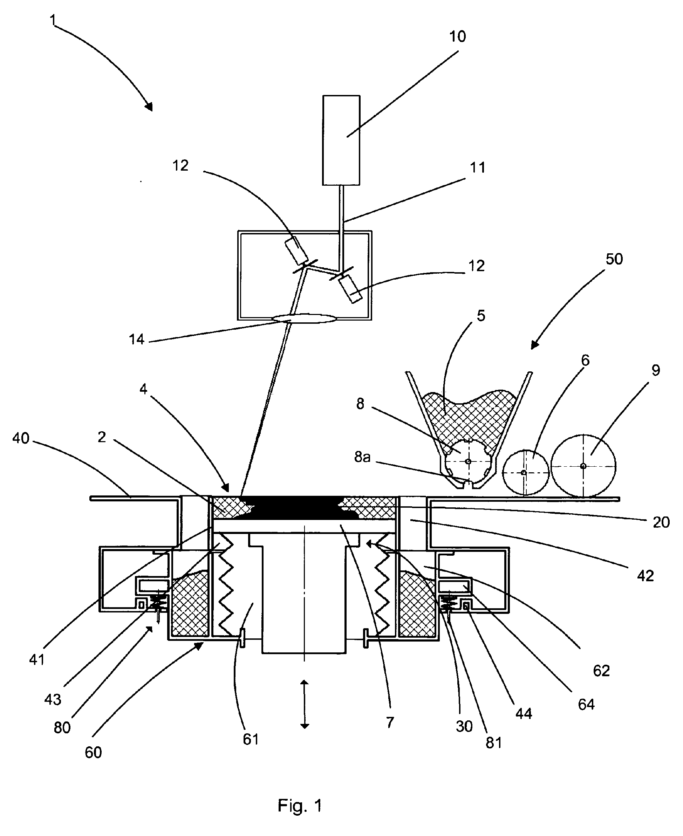

A la figure 1, on a représenté schématiquement un exemple de réalisation d'une machine 1 pour la fabrication additive d'une pièce 20. Comme décrit au préambule de la demande, l'invention s'applique en réalité à tous les types de fabrication additive à base de poudre par frittage ou par fusion totale des grains de ladite poudre à l'aide d'un faisceau énergétique comme un rayonnement électromagnétique (par exemple un faisceau laser) ou un faisceau de particules (par exemple un faisceau d'électrons).

Une source énergétique, ici une source laser 10, émet un faisceau laser 11 dont l'orientation est contrôlée par des miroirs galvanométriques 12. Une lentille optique 14 permet de focaliser le faisceau 11 au niveau de la zone de travail 4 afin de chauffer la couche supérieure de poudre 2 selon un motif précis et ainsi réaliser de manière sélective la fusion de la poudre. Après le traitement par le faisceau laser d'une couche de poudre, le plateau de fabrication 7 est abaissé d'une épaisseur unitaire (correspondant à celle d'une couche de poudre) et recouvert d'une nouvelle couche de poudre et ainsi de suite afin de former, couche après couche, la pièce 20. Selon le type de faisceau énergétique et les poudres utilisés, l'épaisseur d'une couche de poudre peut varier de quelques micromètres (par exemple 10µm) à plusieurs centaines de micromètres (par exemple 500µm = 0.5 mm). Lorsque la pièce 20 est terminée c'est à dire lorsque toutes les couches nécessaires à sa construction ont été successivement solidifiées, la pièce est évacuée de la zone de travail.

La machine 1 comprend également un dispositif de mise en couche 50 permettant l'application d'une nouvelle couche de poudre sur la zone de travail 4. Le dispositif de mise en couche 50 de la figure 1 comprend une trémie d'alimentation 5 et un rouleau de répartition 6 de la poudre 2 sur la zone de travail 4. La trémie d'alimentation 5 comporte en sa partie inférieure un rouleau de dosage 8 comportant des rainures 8a ayant pour fonction de transférer une quantité précise ou dose de poudre 2 de la trémie 5 au rouleau de répartition 6. Le dispositif de mise en couche 50 comporte en outre un rouleau de compactage 9. L'épaisseur finale de la couche de poudre est donc le résultat de deux opérations successives. Une première épaisseur est définie par le rouleau de répartition 6, cette épaisseur étant ensuite réduite et rendue encore plus homogène par l'action du rouleau de compactage 9. Le rouleau de compactage 9 se déplace avec la trémie d'alimentation 5 et le rouleau de répartition 6. La trémie d'alimentation 5, le rouleau de répartition 6 et le rouleau de compactage 9 sont portés par un ou plusieurs chariots qui sont mobiles entre les moyens de stockage de poudre (non représentés) et la zone de travail 4.

La zone de travail 4 est délimitée au sein d'un châssis fixe 40 de la machine 1, par une chemise 41 à l'intérieur de laquelle coulisse le plateau de fabrication 7 entraîné en translation verticale par un vérin 31, tel qu'indiqué par la double flèche sur la figure 1. La chemise 41 est solidaire du châssis 40, en étant montée fixe ou en étant réalisée en une pièce avec ce dernier. La chemise 41 a une section transversale de forme circulaire, carrée ou rectangulaire et est située au sein du châssis 40 en regard de la zone d'action de la source laser 10. La chemise 41 comporte une ouverture centrale 43 pour le passage du plateau 7 et des passages ou ouvertures latérales 42. Les ouvertures latérales 42 sont pratiquées sur le pourtour de la chemise 41, dans toute son épaisseur, afin de permettre l'évacuation de l'excédent de poudre 2 lors de la mise en couche. Le plateau 7 a une section transversale ayant une même forme que celle de la chemise 41 et des dimensions proches de celles-ci à l'intérieur de laquelle il coulisse avec un jeu j1. Le plateau 7 forme un support pour l'objet tridimensionnel qui sera construit. La chemise 41 constitue le cadre de construction de l'objet et a une hauteur au moins égale à celle de l'objet tridimensionnel à construire à laquelle on additionne l'épaisseur du plateau 7.

Le vérin 31 appartient à un dispositif de déplacement en translation 30. Le vérin 31 peut être du type hydraulique pneumatique ou électrique. Dans une variante préférée de réalisation de l'invention, on utilise un vérin électrique dont le déplacement de la tige peut être contrôlé de manière très précise. Le dispositif de déplacement en translation 30 comprend un boîtier externe solidaire du châssis 40 de la machine et des moyens de guidage en translation (non représentés aux dessins) du vérin 31.Le vérin 31 est guidé en translation à l'intérieur du boîtier externe du dispositif 30 entre une position haute et une position basse, la tête 32 du vérin 31 étant destinée à venir en prise avec le plateau 7.

Dans l'exemple représenté aux figures, la machine 1 comprend un conteneur interchangeable 60 qui est agencé entre la chemise 41 et la tête 32 du vérin 31, lorsqu'il est en position basse. Le conteneur interchangeable 60 est introduit sous la chemise 41, notamment en le faisant glisser sur des rails 44 appartenant au châssis 40. Le conteneur interchangeable 60 comporte des ailettes latérales 64 d'appui qui glissent le long des rails 44 jusqu'à une butée de fond qui lui permet un positionnement précis en regard de la chemise 41. Il est ensuite fixé en cette position moyennant un mécanisme de fixation 80 à ressorts 81 permettant à la bordure supérieure du conteneur 60 de venir se plaquer contre les parois de la bordure inférieure du châssis 40.

Le conteneur interchangeable 60 comprend une chambre interne 61 à l'intérieur de laquelle peut se déplacer en translation verticale le plateau 7 sous l'action du vérin 31. La section transversale de la chambre interne 61 a une même forme que celle du plateau 7, le jeu entre la périphérie externe du plateau 7 et les parois de la chambre interne 61 étant j2, avec j2>j1. La chambre interne 61 est entourée d'un couloir périphérique 62 ouvert en sa partie supérieure pour communiquer avec les passages 42 du châssis 40. La section transversale du couloir périphérique 62 est supérieure à celle des passages 42, le couloir étant dimensionné de manière à pouvoir stocker toute la quantité de poudre récupérée lors des différentes mises en couches successives nécessaires pour la fabrication de l'objet ou pièce 20.

Dans un autre mode de réalisation de l'invention (non représenté aux figures), la machine 1 ne comporte pas de conteneur interchangeable, le plateau 7 étant amené à coulisser à l'intérieur de la chemise de construction de la machine, entre une partie supérieure ouverte et une partie inférieure fermée autour de la tête de vérin 32. Dans ce cas, l'objet tridimensionnel fabriqué est évacué avec le plateau 7 en amenant ce dernier en position haute pour le faire sortir de la chemise 41, afin de pouvoir ensuite le récupérer au niveau de la surface supérieure du châssis 40.

Dans encore un autre mode de réalisation (non représenté aux dessins), la chemise de construction est amovible ou appartient à un conteneur amovible.

Selon un aspect avantageux de l'invention, le plateau de fabrication 7 coulisse librement à l'intérieur de la chemise 41, aucun joint d'étanchéité n'étant prévu sur la périphérie du plateau ou entre ce dernier et la chemise 41. En effet, il a été observé los des tests effectués en laboratoire que, pour un jeu entre le plateau et la chemise et une rugosité de leur surfaces en vis-à-vis prédéterminés, les particules de poudre ne bloquent pas l'interstice existant entre les parois internes de la chemise de construction 41, mais permettent le coulissement du plateau 7.

Le vérin 31 est agencé à l'intérieur d'un dispositif de déplacement en translation, des moyens de guidage 90 étant prévus pour assurer le guidage en translation du vérin 31 au sein de l'dispositif 30. Plus particulièrement selon l'invention, le vérin 31 est agencé à l'intérieur d'une colonne tubulaire 39 à l'intérieur de laquelle coulisse un tube 38, le cylindre du vérin étant fixé à la colonne 39 et la tige au tube 38, et des moyens de guidage en translation étant prévus entre le tube 38 et la colonne 39. Ainsi, on agence le vérin à l'intérieur d'un dispositif qui est idéalement aligné sur l'axe du plateau 7, donc sous le centre de gravité de la charge à supporter, et permet d'assurer une bonne transmission de l'effort axial du vérin 31. Un tel agencement de vérin assure un appui du plateau 7 sur un support de grand diamètre, ce qui lui permet de supporter des plus fortes sollicitations et en réduire la flèche, tout en permettant d'avoir une construction compacte du dispositif de déplacement en translation. Une telle construction convient à l'utilisation avec un plateau de grandes dimensions, avec un rapport entre les dimensions (diamètre) de la tête de vérin 32 et celles (diamètre ou largeur) du plateau 7 supérieur à 1:2, de préférence égal à environ 3:4. Par ailleurs, un tel guidage présente une bonne rigidité verticale, ce qui permet au dispositif d'encaisser des forces transversales au plateau.

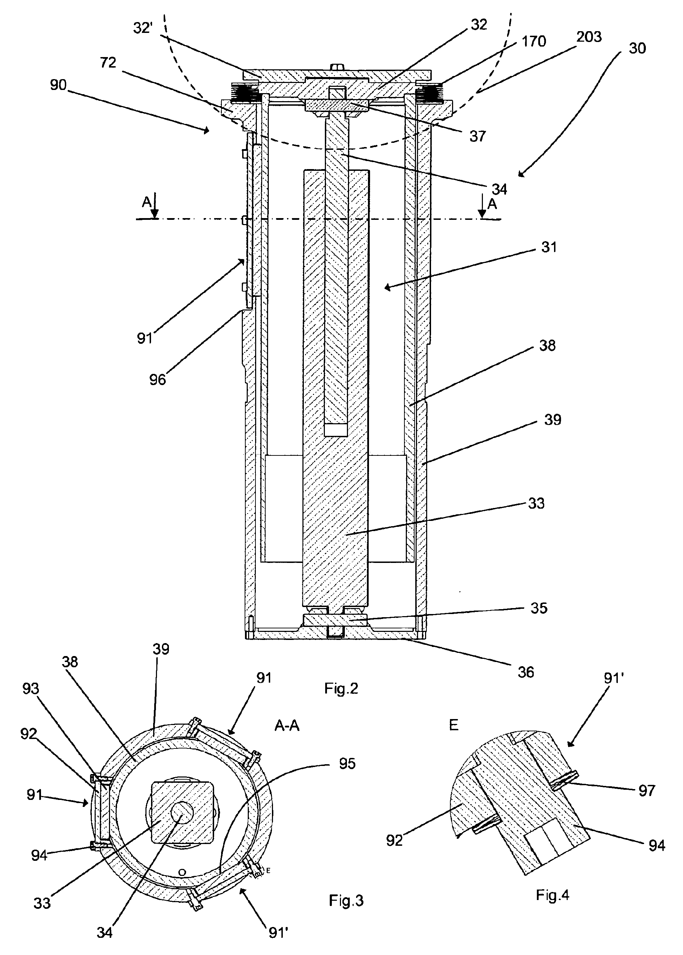

Dans une variante préférée de l'invention, le vérin 31 est un vérin électrique par exemple un cylindre de levage électrique du type MPAI de la société Rockwell Automation. Un tel vérin offre des avantages de vitesse et de positionnement très précis, ainsi que d'efficacité énergétique sans présenter les risques de contamination et de nettoyage d'un vérin hydraulique. Tel que mieux visible à la figure 2, le vérin 31 est représenté schématiquement par un cylindre 33 à l'intérieur duquel se déplace une tige 34 et il est agencé en position verticale à l'intérieur d'une colonne 39 tubulaire montée sur le châssis 40 de la machine 1. Le cylindre 33 est fixé moyennant une rotule inférieure 35 sur une plaque de base 36 de la colonne 39. La tige 34 est montée moyennant une rotule supérieure 37 sur une plaque de sommet formant la tête de vérin 32. La tête de vérin 32 est fixée (par exemple à l'aide des vis) sur la face frontale supérieure d'un tube interne 38 en alignant l'axe de la tige 34 selon l'axe du tube 38. Dans l'exemple représenté sur les dessins, le tube interne 38 et la colonne 39 ont une forme générale cylindrique et sont coaxiaux.

Tel que mieux visible à la fig. 3, sur la surface externe du tube interne 38 sont pratiqués trois méplats 95 uniformément répartis sur sa circonférence, en réalisant trois usinages à 120° qui s'étendent sur toute la longueur du tube interne 38. La colonne 39 comprend trois patins de guidage : deux patins de guidage fixes 91 et un patin de guidage mobile 91' disposés sur la circonférence de la colonne 39 de manière à ce que chaque patin de guidage puisse venir en contact avec un méplat 95 du tube interne 38.

Pour des facilités de fixation des patins 91 et 91' sur la colonne 39, trois fenêtres 96 sont pratiquées en partie haute de la colonne 39. Chaque fenêtre 96 comporte une partie centrale traversante de forme rectangulaire entourée d'une bordure périphérique rectangulaire d'épaisseur inférieure à celle de la colonne 39. Un patin de guidage 91 est un ensemble composé d'une garniture 93 solidaire d'une plaque de support 92 qui est fixée sur la colonne 39 avec des vis 94. La garniture 93 est fixée sur la plaque de support 92 par collage ou par fixation mécanique et est réalisée en un matériau antifriction ayant de bonnes propriétés de glissement. Un tel matériau antifriction est un matériau composite à faible coefficient de frottement, par exemple du type D-Glide de la société Eternum^{®}. Ce matériau composite permet un fonctionnement à sec, sans lubrification, pour un coefficient de frottement de 0,04 permet le glissement lors du déplacement sans phénomène de collé-glissé (ou stick-slip) du patin sur la surface des méplats 95 du tube interne 38. Par ailleurs, il a été constaté lors des tests effectués en laboratoire que le matériau composite de la garniture 93 permet d'absorber les particules de poudre arrivées par accident au niveau du patin de guidage, sans nuire à la qualité du guidage. Le patin de guidage mobile 91' comprend les mêmes composants qu'un patin de guidage fixe 91 auxquels s'ajoutent deux rondelles ressort (ou rondelles « Belleville ») 97 (fig. 4) disposées entre la vis 94 et la plaque de support 92. Un tel patin 91' est alors plaqué contre l'un des méplats 95 du tube interne 38.

Cette solution d'assemblage à deux patins de guidage fixes 91 et un patin de guidage mobile 91' permet un bon fonctionnement de l'ensemble de guidage, en évitant une construction hyperstatique (à trois patins fixes), tout en permettant un glissement parallèle des patins sur les méplats du tube et d'absorber les défauts géométriques des pièces constituant l'ensemble de guidage, voire de compenser l'usure des surfaces de guidage.

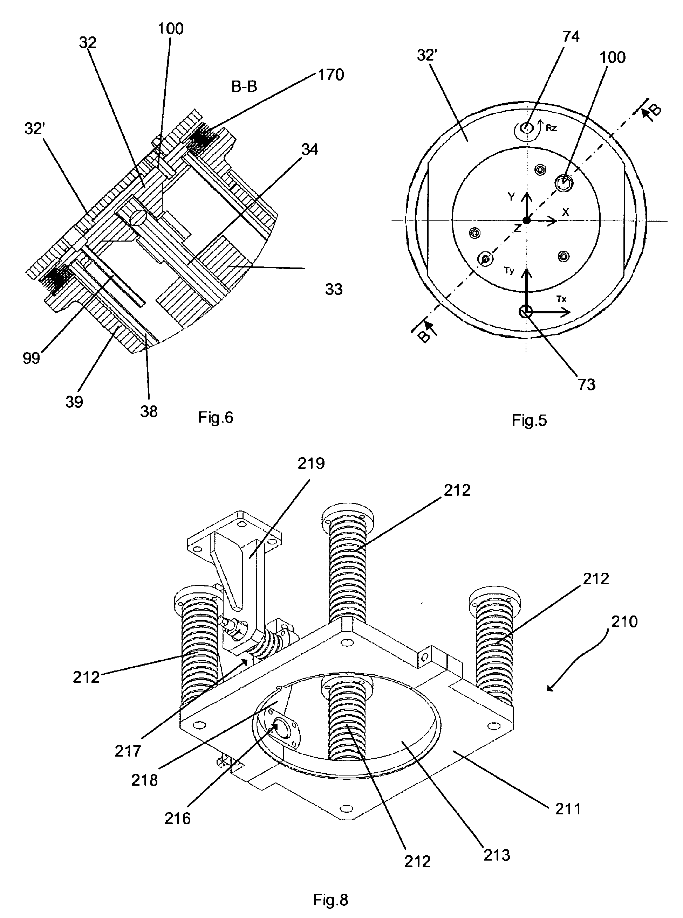

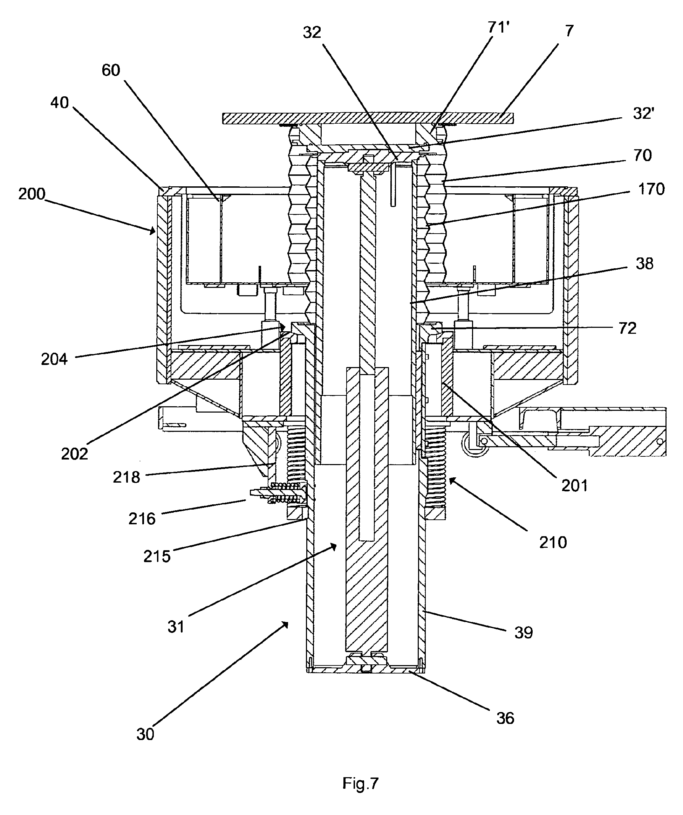

Tel que mieux visible à la fig. 6, la tête de vérin 32 comporte une interface 32' de support d'un plateau intermédiaire 71 sur lequel prend appui le plateau de support 7 de l'objet à fabriquer. Dans l'exemple représenté, la fixation entre le plateau intermédiaire 71 et la tête de vérin 32 se fait par le vide, un tuyau 99 étant raccordé à une pompe à vide (non illustrée) à l'intérieur de la colonne 39. Un soufflet 170 étanche est disposé entre l'interface 32' et la face supérieure d'une collerette 72 de la colonne 39. La fig. 7 illustre le vérin 31 en position complétement déployée et l'on observe que le soufflet 170 entoure le tube interne 38 et assure l'étanchéité entre la tête de vérin 32 et la colonne 39.

Tel que mieux visible à la fig. 5, l'interface 32' comprend des moyens d'indexage du plateau intermédiaire 71 par rapport au vérin 32, ces moyens d'indexage comprenant un pion cylindrique 73 constituant un centreur complet et, diamétralement opposé, un pion à tête prismatique 74 constituant un centreur dégagé. Dans cette configuration, le pion 73 bloque les translations Tx, Ty le long des axes x et y et le pion 74 bloque la rotation Rz autour de l'axe z. Les autres degrés de liberté sont bloqués par l'appui du plateau intermédiaire 71 sur l'interface 32'. Dans une variante (non représentée aux dessins) le plateau intermédiaire est absent et le plateau 7 vient directement en prise avec la tête de vérin 32 ou avec l'interface 32' qui est, elle, munie des moyens d'indexation et de fixation du plateau 7.

Selon un aspect avantageux de l'invention, le dispositif de déplacement en translation 30 est monté suspendu au sein du châssis 40 de la machine 1. Dans la variante illustrée à la figure 7, la machine 1 comprend un boîtier 200 de support monté fixe sur le châssis 40 de celle-ci. La partie centrale du boîtier 200 comporte un socle 201 tubulaire qui se termine en sa partie supérieure par un anneau de support 202 de la colonne 39. Lorsqu'elle est montée sur le socle 201, la colonne 39 présente une distance au sol de plusieurs dizaines de mm, le châssis 40 étant fixé sur le bâti de la machine qui prend, lui, appui au sol moyennant des pieds (non illustré dans les dessins).

Selon un aspect avantageux de l'invention, la collerette 72 de la colonne 39 repose sur le socle 201 moyennant une articulation sphérique 204. Dans la variante illustrée à la fig. 7, le contact entre la collerette 72 et l'anneau de support 202 est une sphère de contact 203 dont le centre est situé sensiblement au centre de la surface de construction du plateau 7 lorsque celui-ci est en position haute (on comprend au même niveau que la face supérieure de la chemise 41). Ceci permet un réglage de la position du dispositif de déplacement en translation 30 suivant les axes Ox et Oy, tel qu'il sera expliqué par la suite.

Selon un autre aspect avantageux de l'invention, la colonne 39 est montée moyennant un dispositif de précharge 210 au châssis 40. Tel que mieux visible à la fig.8, le dispositif de précharge 210 comprend une bride 211 de forme carrée comportant un orifice central 213, à travers lequel passe la partie inférieure de la colonne 39 jusqu'à un épaulement 215 de celle-ci, et quatre ressorts de compression 212 fixés à leur extrémité inférieure aux quatre coins de la bride 211. L'extrémité supérieure de chaque ressort 212 est fixée sur la partie inférieure du support 200. La fixation des ressorts 212 se fait sur quelques mm à leurs extrémités respectives et le rapport longueur totale/diamètre du ressort 212 est choisi pour être suffisamment important pour que les ressorts 212 puissent fournir un effort de compression selon une direction verticale, sans introduire des contraintes latérales parasites. A titre d'exemple, la force fournie par les quatre ressorts 212 est d'environ 600 daN. Dans une variante de réalisation de l'invention (non illustrée sur les dessins), le dispositif de précharge utilise à la place des ressorts de compression des tirants articulés montés sur rotule et comportant des rondelles élastiques (ou de type « Belleville »). Ces montages permettent d'exercer un effort vertical sur la colonne 39 et de la maintenir fixe en étant plaquée sur le boîtier 200 (et donc sur le châssis 40) et d'éviter l'apparition des vibrations en fonctionnement.

Selon un autre aspect avantageux de l'invention, le dispositif de déplacement en translation 30 est réglable en effectuant des rotations autour des axes x, y et z qui sont parallèles à ceux du référentiel de la machine. Tel que mieux visible aux figures 5 et 6, la rotation autour de l'axe z se fait en tournant la tête de réglage à excentrique 100 autour de son axe vertical. Les réglages selon les axes x et y se font à l'aide des vérins de réglage 216 et 217 (fig. 7 et 8) agencés l'un selon l'axe x et l'autre selon l'axe y, et dont la tête (on comprend l'extrémité du vérin opposée à celle de réglage) est fixée sur la colonne 39. Chaque vérin de réglage 216, 217 est monté moyennant un support de vérin 218, 219 au boîtier 200 de la machine.

Un vérin de réglage 216, 217 est constitué d'un dispositif à vis et écrou à pas fin, préchargé par un effort axial fourni par un ressort (par exemple un ressort de compression ou un paquet de rondelles élastiques de type « Belleville ») pour supprimer les jeux entre le la vis et l'écrou. La tête de l'écrou et celle de la vis sont sphériques et coopèrent avec des portées sphériques au sein du vérin de réglage afin de ne pas introduire des efforts parasites sur la colonne 39.

Le réglage du dispositif de déplacement en translation 30 se fait en début d'opération de montage de l'ensemble sur la machine en montant un plateau 7 sur le plateau intermédiaire 71 qui est, lui rendu solidaire de la tête de vérin 32. Un premier réglage autour de l'axe z est effectué afin d'orienter le plateau 7 par rapport à la chemise 41. Ensuite, le plateau 7 est amené en position haute (au niveau de la zone de travail 4) et il est procédé à une mesure de sa planéité par rapport au référentiel de la machine. Cette mesure peut se faire en utilisant des capteurs de mesure de distance sans contact ou en procédant à un passage du rouleau de mise en couche et en mesurant le courant absorbé par son moteur d'actionnement. La position du plateau 7 est ensuite modifiée en actionnant les vérins de réglage 216, 217 de manière à ce qu'il soit bien orienté par rapport à la chemise 41. Ce réglage est effectué au montage de la machine, puis en cas de besoin, après vérification avec un plateau de référence.

En fonctionnement, on commence par approvisionner la machine 1 en un conteneur interchangeable 60 qui contient un plateau 7 situé dans la partie inférieure du conteneur 60, le soufflet 70 étant à l'état comprimé, sous le plateau 7. Le conteneur interchangeable 60 est agencé sous de la chemise 41, en le faisant glisser sur les rails 44, jusqu'à une position de butée. Lorsque le conteneur 60 est dans la bonne position, on actionne un mécanisme de fixation 80 de ce dernier par rapport au châssis 40. Une fois le conteneur fixé au châssis 40, les moyens de contrôle de la machine permettent l'actionnement du vérin 31 en un mouvement de translation vers le haut de sa tige jusqu'à ce sa tête 32 vient en appui contre la face inférieure du plateau intermédiaire 71 qui supporte le plateau 7. Le blocage de la tête 32 sur le plateau 7 se fait en actionnant un dispositif à vide. Le plateau de fabrication 7 est poussé vers le haut par la tête de vérin 32, commandée par les moyens de contrôle de la machine, à travers la chambre interne 61 et la chemise de construction 41 jusqu'en partie supérieure de celle-ci. Le plateau 7 est maintenant prêt à recevoir une couche de poudre en provenance du dispositif de mise en couche 50. La couche de poudre déposée est chauffée par le faisceau laser et solidifiée dans des points précis de sa surface, selon les instructions reçues d'une unité de commande de la machine 1. Après solidification de la première couche de poudre, le plateau descend en étant entraîné par le vérin 31 de manière à pouvoir continuer la fabrication par dépôt et solidification d'une nouvelle couche de poudre. A la fin de l'opération de fabrication de la pièce 20, la tête de vérin 32 descend jusqu'à ce que le plateau 7 supportant la pièce fabriquée se trouve au fond du conteneur interchangeable 60. La tête de vérin 32 descend encore et est désolidarisée du plateau 7. Les moyens de fixation 80 sont ensuite actionnés pour détacher le conteneur interchangeable 60 du châssis 40. Le conteneur 60 peut maintenant être retiré du châssis 40 et transporté (manuellement par un opérateur ou de préférence automatiquement à l'aide des moyens mécaniques, tels un convoyeur à chaines, d'un bras de robot, etc.) vers un autre poste de travail qui permet de récupérer la pièce 20 et le plateau 7 de la chambre interne 61, ainsi que la poudre 2 présente dans le couloir périphérique 62.

La poudre utilisée est de préférence une poudre métallique ou céramique. Selon les types de faisceaux énergétiques mis en oeuvre et l'épaisseur de la couche finale visée, la granulométrie préférée de la poudre peut varier de quelques microns (par exemple 5 µm) à 300 ou 400 µm.

D'autres variantes et modes de réalisation de l'invention peuvent être envisagés sans sortir du cadre de ces revendications. Ainsi, le dispositif de guidage en translation peut être agencé dans une machine exempte de conteneur interchangeable et comportant une chemise de fabrication de l'objet qui est traversée par la tête de vérin et le plateau. Dans une autre variante de réalisation de l'invention, la chemise peut être absente, le conteneur comportant alors un cadre de fabrication de l'objet et des moyens de fixation au châssis de la machine.

## Revendications

1. Machine (1) pour la fabrication additive d'un objet tridimensionnel par frittage ou fusion de poudre (2) à l'aide d'un faisceau énergétique (3) agissant sur une couche de poudre dans une zone de travail (4), comportant un dispositif de déplacement en translation verticale (30) d'un plateau de support (7) à l'intérieur d'une chemise de fabrication (41) montée sur le châssis (40) de ladite machine, ledit dispositif comportant
- une colonne (39) montée sur ledit châssis (40) à l'intérieur de laquelle est agencé
- un vérin (31) comportant un corps solidaire de ladite colonne et une tige mobile reliée audit plateau (7)
- des moyens de guidage (90) de la tige mobile dudit vérin (31),
**caractérisée en ce que** lesdits moyens de guidage (90) comportent des éléments de guidage prismatiques sur ladite colonne (39) et sur un tube (38) coaxial à celle-ci qui se déplace avec la tige mobile dudit vérin (31).

2. Machine selon la revendication 1, **caractérisé en ce que** ledit tube (38) est agencé à l'intérieur de ladite colonne (39).

3. Machine selon l'une des revendications 1 ou 2, **caractérisé en ce que** ladite colonne (39) comporte plusieurs patins de guidage (91, 91') uniformément répartis sur sa périphérie interne qui sont destinés à venir en contact avec des méplats (95) aménagés à l'extérieur du tube (38).

4. Machine selon la revendication 3, **caractérisé en ce qu'**elle comporte deux patins de guidage fixes (91) et un patin de guidage mobile (91').

5. Machine selon l'une des revendications précédentes, **caractérisé en ce qu'**elle comporte un soufflet étanche agencé entre ladite colonne (39) et ledit tube (38).

6. Machine selon l'une des revendications précédentes, **caractérisé en ce que** ladite colonne est montée moyennant un dispositif de précharge (210) sur ledit châssis (40).

7. Machine selon l'une des revendications précédentes, **caractérisé en ce que** ladite colonne (39) est montée moyennant une articulation sphérique (204) par rapport audit châssis (40).

8. Machine selon la revendication 7, **caractérisé en ce que** le centre de la sphère de contact (203) de ladite articulation sphérique (204) est situé sur la surface de construction du plateau de support.

9. Machine selon l'une des revendications précédentes, caractérisée en qu'elle comporte des moyens de réglage de la position de ladite colonne (39) par rapport audit châssis (40).

10. Machine selon la revendication 9, caractérisée en ce lesdits moyens de réglage sont aptes à ajuster la position de la colonne (39) autour de ladite articulation sphérique (204).

11. Machine selon l'une des revendications précédentes, **caractérisée en ce que** ledit plateau (7) se déplace à l'intérieur d'une chemise (41) appartenant au châssis (40) de la machine et à l'intérieur d'un conteneur interchangeable (60) agencé sous ladite chemise (41).

## Patentansprüche

1. Maschine (1) zur additiven Herstellung eines dreidimensionalen Objekts durch Sintern oder Schmelzen von Pulver (2) mittels eines auf eine Pulverschicht in einem Arbeitsbereich (4) wirkenden Energiestrahls (3), die eine Vorrichtung (30) zum vertikalen translatorischen Verschieben einer Trägerplatte (7) im Inneren eines Fertigungsraums (41) aufweist, der an dem Gestell (40) der Maschine befestigt ist, wobei die Vorrichtung Folgendes aufweist:
- eine Säule (39), die an dem Gestell (40) befestigt ist, in deren Inneren
- ein Zylinder (31) angeordnet ist, der einen einstückig mit der Säule ausgebildeten Körper und eine mit der Platte (7) verbundene, bewegliche Stange aufweist
- Mittel (90) zum Führen der beweglichen Stange des Zylinders (31),
**dadurch gekennzeichnet, dass** die Führungsmittel (90) prismatische Führungselemente an der Säule (39) und an einem Rohr (38), das koaxial zu ihr angeordnet ist und sich mit der beweglichen Stange des Zylinders (31) verschiebt, aufweisen.

2. Maschine nach Anspruch 1, **dadurch gekennzeichnet, dass** das Rohr (38) im Inneren der Säule (39) angeordnet ist.

3. Maschine nach einem der Ansprüche 1 oder 2, **dadurch gekennzeichnet, dass** die Säule (39) mehrere Führungsleisten (91, 91') aufweist, die gleichmäßig über ihren Innenumfang verteilt sind und dazu bestimmt sind, mit den Abflachungen (95) in Kontakt zu kommen, die an der Außenseite des Rohrs (38) vorgesehen sind.

4. Maschine nach Anspruch 3, **dadurch gekennzeichnet, dass** sie zwei feststehende Führungsleisten (91) und eine bewegliche Führungsleiste (91') aufweist.

5. Maschine nach einem der vorhergehenden Ansprüche, **dadurch gekennzeichnet, dass** sie einen dichten Balg aufweist, der zwischen der Säule (39) und dem Rohr (38) vorgesehen ist.

6. Maschine nach einem der vorhergehenden Ansprüche, **dadurch gekennzeichnet, dass** die Säule mittels einer Vorspannvorrichtung (210) an dem Gestell (40) befestigt ist.

7. Maschine nach einem der vorhergehenden Ansprüche, **dadurch gekennzeichnet, dass** die Säule (39) mittels eines Kugelgelenks (204) relativ zu dem Gestell (40) befestigt ist.

8. Maschine nach Anspruch 7, **dadurch gekennzeichnet, dass** sich der Mittelpunkt der Kontaktkugel (203) des Kugelgelenks (204) auf der Konstruktionsfläche der Trägerplatte befindet.

9. Maschine nach einem der vorhergehenden Ansprüche, **dadurch gekennzeichnet, dass** sie Mittel zum Einstellen der Position der Säule (39) relativ zu dem Gestell (40) aufweist.

10. Maschine nach Anspruch 9, **dadurch gekennzeichnet, dass** die Einstellmittel geeignet sind, die Position der Säule (39) um das Kugelgelenk (204) herum einzustellen.

11. Maschine nach einem der vorhergehenden Ansprüche, **dadurch gekennzeichnet, dass** sich die Platte (7) im Inneren eines Raums (41), der zu dem Gestell (40) der Maschine gehört, und im Inneren eines Wechselbehälters (60), der unter dem Raum (41) vorgesehen ist, verschiebt.

## Claims

1. Machine (1) for additive manufacturing of a three-dimensional object by sintering or melting powder (2) using an energy beam (3) acting on a powder layer in a working zone (4), comprising a device (30) for moving a supporting plate (7) vertically in translation inside a manufacturing sleeve (41) mounted on the frame (40) of said machine, said device comprising:
- a column (39) mounted on said frame (40), inside of which column a cylinder (31) is arranged,
- said cylinder (31) comprising a body securely fastened to said column and a movable rod connected to said plate (7);
- and means (90) for guiding the movable rod of said cylinder (31),
**characterized in that** said guiding means (90) comprise prismatic guiding elements located on said column (39) and on a tube (38) arranged coaxially with the latter and which moves with the movable rod of said cylinder (31).

2. Machine according to claim 1, wherein said tube (38) is arranged inside the column (39).

3. Machine according to one of claims 1 or 2, wherein said column (39) comprises a plurality of guiding pads (91,91') uniformly distributed on its internal periphery and which are intended to come in contact with flats (95) arranged outside of the tube (38).

4. Machine according to claim 3, wherein said machine comprises two fixed guidings pads (91) and one mobile guiding pad (91').

5. Machine according to one of the preceding claims, wherein said machine comprises a tight bellows arranged between said column (39) and said tube (38).

6. Machine according to one of the preceding claims, wherein said column is mounted via a preload device (210) on the frame (40).

7. Machine according to one of the preceding claims, wherein said column (39) is mounted via a spherical articulation (204) on the frame (40).

8. Machine according to claim 7, wherein the center of the contacting sphere (203) of said spherical articulation (204) is located on the building surface of the supporting plate.

9. Machine according to one of the preceding claims, wherein said machine comprises means for modifying the position of the column (39) in relation to the frame (40).

10. Machine according to claim 9, wherein the modifying means are able to modify the position of the column (39) around the spherical articulation (204).

11. Machine according to one of the preceding claims, wherein the plate (7) moves inside a sleeve (41) being part of the frame (40) of the machine and inside an interchangeable container (60) arranged under said sleeve (41).
